**Europäisches Patentamt**

(19) **European Patent Office**

**Office européen des brevets**

(11) Publication number: **0 221 652**
**B1**

(12) # EUROPEAN PATENT SPECIFICATION

(45) Date of publication of the patent specification:
28.02.90

(51) Int. Cl.⁴: **B23Q 11/00, B23D 49/16**

(21) Application number: **86307006.6**

(22) Date of filing: **11.09.86**

(54) Improvements in or relating to power tools.

(30) Priority: **27.09.85 GB 8523854**

(43) Date of publication of application:
**13.05.87 Bulletin 87/20**

(45) Publication of the grant of the patent:
**28.02.90 Bulletin 90/9**

(84) Designated Contracting States:
**DE FR GB**

(56) References cited:
**EP-A- 0 073 693**
**GB-A- 1 452 435**
**GB-A- 2 075 421**
**US-A- 4 051 880**

(73) Proprietor: **Black & Decker Inc., Drummond Plaza Office Park 1423 Kirkwood Highway, Newark Delaware 19711(US)**

(72) Inventor: **Bone, Daniel, 5 Black Road Langley Moor, Durham DH7 8LW(GB)**

(74) Representative: **Pike, Harold John et al, Abel & Imray Northumberland House 303-306 High Holborn, London, WC1V 7LH(GB)**

**Description**

This invention relates to power tools and has particular, but not exclusive, reference to hand-held power tools, for example jig-saws, sabre saws, plaster saws and routers.

During the operation of such tools, debris is created, for example saw dust. Such debris tends to accumulate in the work area in the vicinity of the saw blade or cutter and can obscure guide lines marked on the work piece. It has also been the practice to provide the tool with means to generate an air blast and to direct the blast on to the work area in the vicinity of the saw blade or cutter to clear the debris from the work area. In most cases, the air blast is obtained by directing to the work area at least part of the output of a fan drawing cooling air over the power unit of the tool. It has also been proposed to control the air blast. However, the air blast tends to disperse the debris into the atmosphere and this is hazardous with certain types of debris. It has also been proposed to provide some tools with a suction passage to draw debris away from the work area. EP-A-073 693 describes a jig saw having both a suction passage and an air blast.

In some tools, as in the jig saw described in EP-A-073 693, the suction passage is joined to a source of vacuum external of the tool.

It has been thought that the air tends to agitate the debris in the work area and this enables the suction in the suction line to remove debris from the work area more effectively.

Accordingly, it is an object of the present invention to provide a power tool having both a passage for directing an air blast on to the work area and a suction passage for drawing debris therefrom and in which the suction passage is operable in an effective manner.

According to the present invention, a power tool comprises a housing accommodating a mechanism for driving a tool piece and in which there is provided a first passage arranged to direct an air flow towards a work area of the tool, and in which there is also provided a second passage extending away from the work area, characterised in that valve means are provided for selectively opening and closing the first and second passages.

In one embodiment the first and second passages share a common outlet adjacent the work area.

In another embodiment, the first and second passages merge into a single passage having an outlet adjacent the work area.

The valve means may be located in or adjacent the common outlet or in the single passage.

The valve means may comprise a valve in the first passage and a separate valve in the second passage. The valve and the separate valves may operatively be linked together in a manner such that as one of the first and second passages is closed, the other thereof is opened.

The valve means may be such that both first and second passages cannot be open simultaneously.

The valve means may comprise a single valve member having a first position in which one of the first and second passages is open and the other thereof closed, and a second position in which the one passage is closed and the other passage open.

The single valve member may be rotatable from one position to the other.

The valve member may be housed in one of the first and second passages and partly in the other.

The valve member may be of generally cylindrical form having a central semi-cylindrical portion which in the first position closes the one passage and in the other position closes the other passage.

Stop means may be provided for limiting the rotational movement of the valve member to about 180° of arc.

The driving mechanism may include a driving motor and a fan for circulating air over the motor, and in which the first passage is positioned to receive a part of the air circulated by the fan.

The second passage may be adapted, at its other end, for connection to a source of vacuum separate from the tool.

The housing may include means for withdrawing air along the second passage from the one end thereof.

Both first and second passages may be accommodated within the housing which may be of two part construction, the said passages being formed by co-operating portions of the housing parts.

By way of example only, a jig-saw embodying the invention will now be described in greater detail with reference to the accompanying drawings of which:

Fig. 1 is a side elevation of the jig-saw,
Fig. 2 is a side elevation of one housing half,
Fig. 3 is a side elevation of the other housing half,

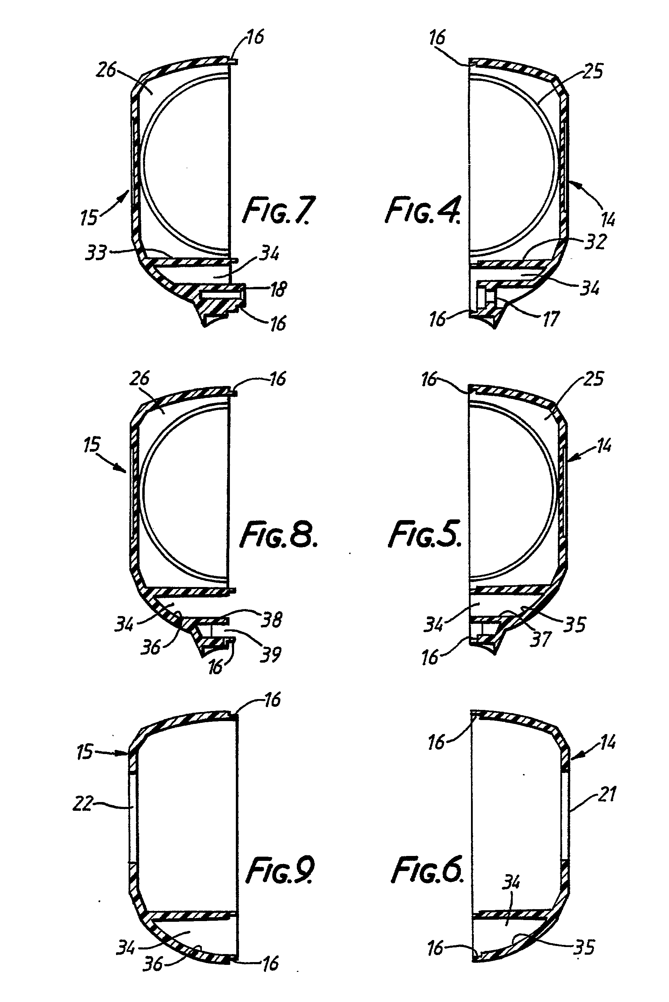

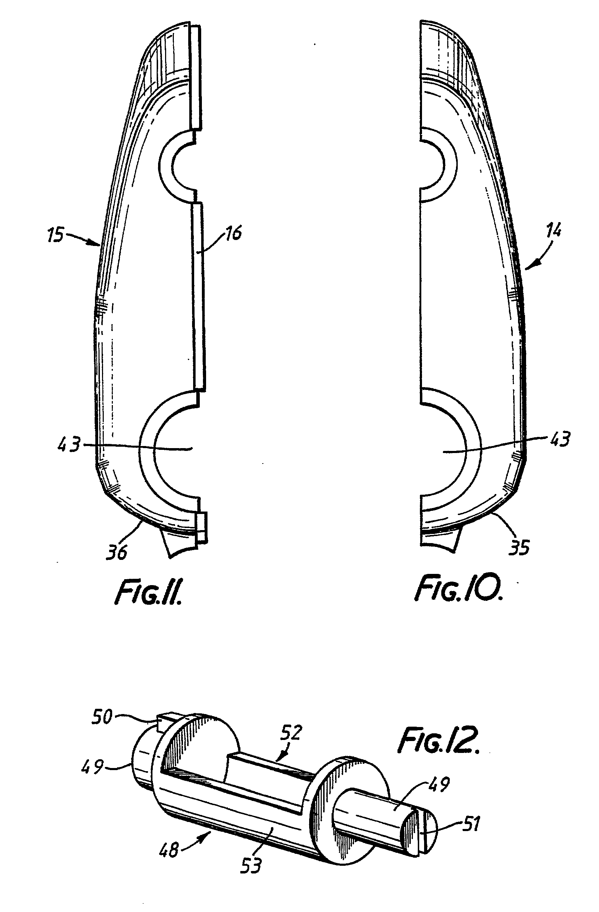

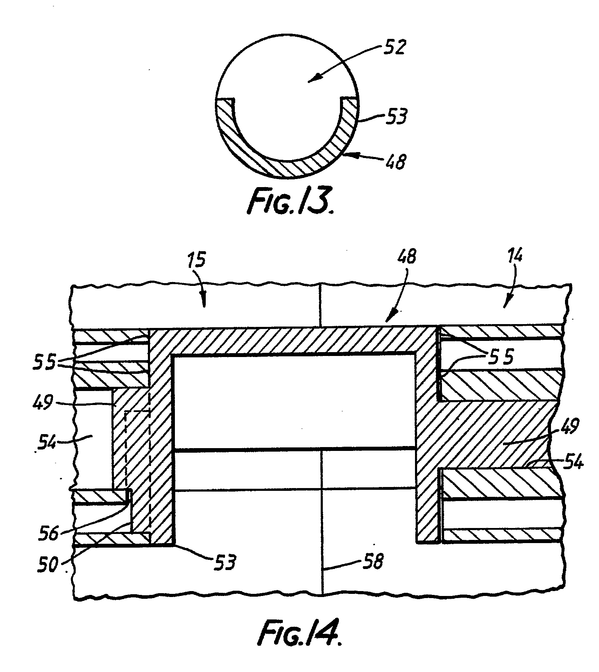

Fig. 4 is a section on the line IV-IV of Fig. 2,
Fig. 5 is a section on the line V-V of FIG. 2,

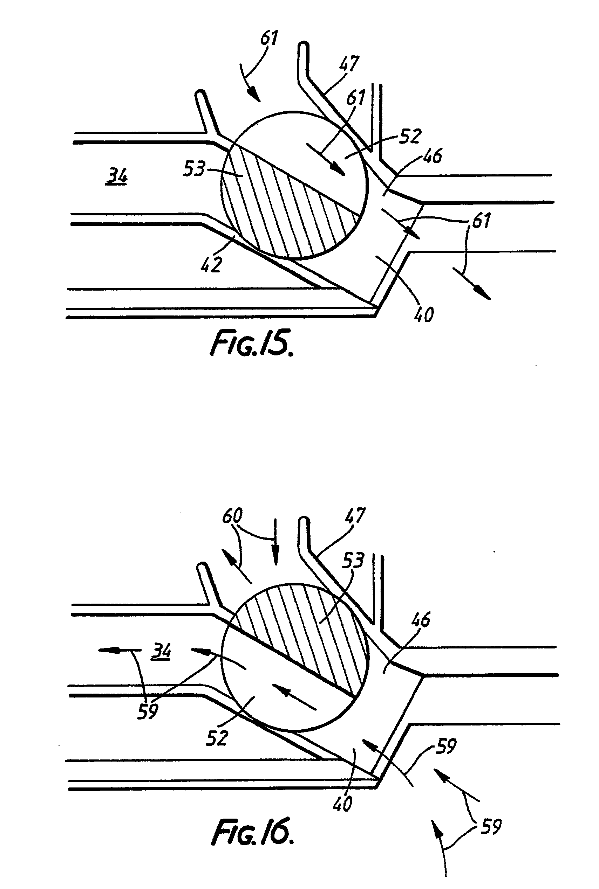

Fig. 6 is a section on the line VI-VI of Fig. 2,
Fig. 7 is a section on the line VII-VII of Fig. 3,
Fig. 8 is a section on the line VIII-VIII of Fig. 3,
Fig. 9 is a section on the line IX-IX of Fig. 3,
Fig. 10 is an end view in the direction of arrow A in Fig. 2,
Fig. 11 is an end view in the direction of arrow B in Fig. 3,
Fig. 12 is a perspective view of a component,
Fig. 13 is a transverse central cross section of the component,
Fig. 14 is a scrap view showing the mounting of the component, and,
Figs. 15 and 16 are explanatory schematic diagrams.

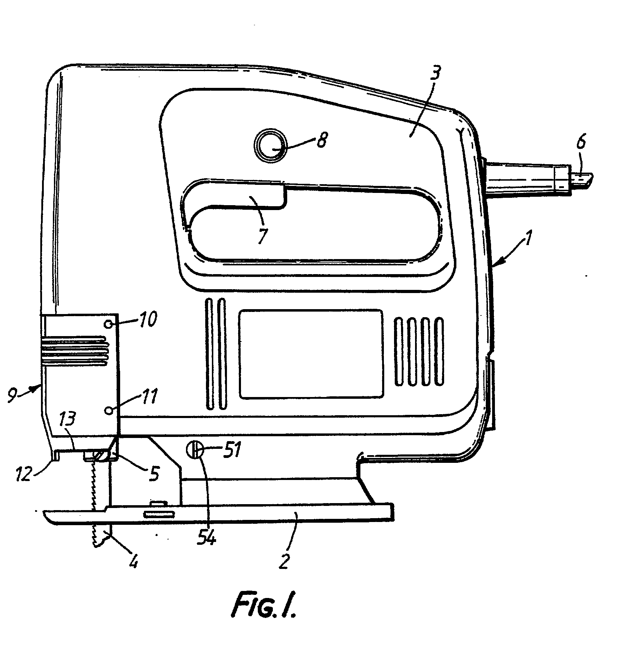

The jig-saw shown in side elevation in Fig. 1 has a housing 1 of two-part clam shell construction with a shoe 2 attached to the lower part of the housing. The housing 1 is formed to provide a handle portion 3. The housing 1 accommodates an electric motor and a drive mechanism for reciprocating a saw blade drive shaft (not shown) to whose lower end a saw blade 4 is secured by means of a releasable clamp 5. The motor and drive mechanism are of conventional form.

Power is supplied to the motor via a cable 6 and is controlled by a switch (not shown) operated by a trigger 7 with a 'lock-on' button 8.

Slidably mounted upon the front of the housing 1 is a guard 9 of a transparent plastics material. The guard 9 occupies the position in which it is shown in Fig. 1 when the jig-saw is not in use. After a saw blade has been secured to the drive shaft by means of the clamp 5, the guard 9 is slid downwardly to a position in which the lower edges of small projections 12 rest on the forward end of the shoe 2. On its inner face, the guard 9 has small projections indicated diagrammatically at 10 and 11 which co-operates with depressions in the surface of the housing 1 to hold the guard in position.

When in its lowered position, the guard forms a protective shield around the front of the saw blade 4 without obscuring the user's view thereof. There is also a narrow gap left between the lower edge 13 of the guard and the upper surface of the shoe 2 whose purpose will be described below.

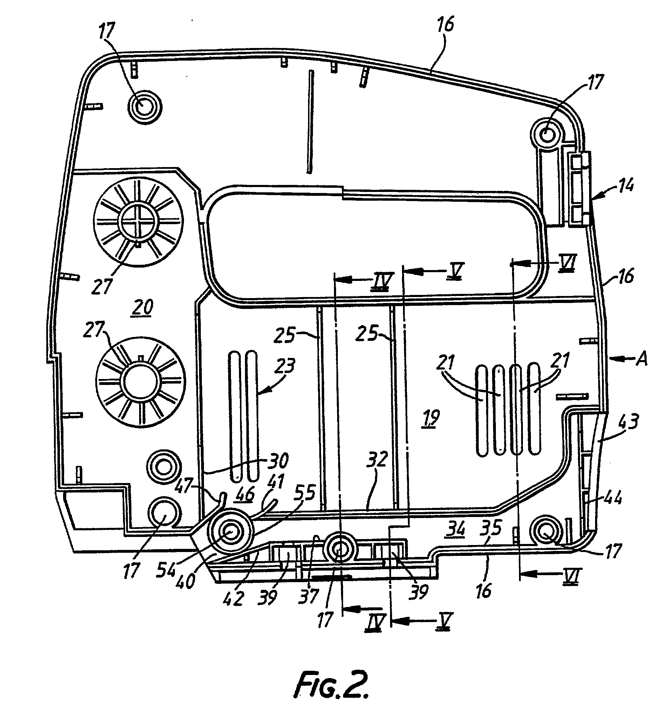

The housing 1 is formed from two housing parts of a suitable plastics material, 14 - Fig. 2 and 15 - Fig. 3, that are formed around their mating edges with co-operating stepped surface 16 that engage when the parts are placed together. The parts are secured together by screws (not shown) that pass through holes 17 in part 14 and into bosses 18 located in part 15 in positions corresponding with those of the holes 17.

The parts 15 and 16 are contoured to provide a space 19 for the motor and an adjacent space 20 for the mechanism for reciprocating the saw blade.

As is conventional in jig-saws, the armature shaft of the motor carries a fan which circulates air over the motor during use to cool the latter. The housing parts 14, 15 have air inlet slots 21, 22 respectively through which the fan draws in air and outlet slots 23, 24 through which a part of the cooling air flow exits to atmosphere.

Each housing part 14, 15 also has ribs 25, 26 respectively in the space 19 for supporting the motor and bosses 27, 28 respectively in the space 20 for locating and supporting the mechanism for reciprocating the saw blade. A wall separates the spaces 19 and 20 and is formed by parts 30, 31 of the housing parts 14, 15 respectively. The wall parts 30, 31 are contoured in a manner such that, when the housing parts are placed together, an aperture is formed in the wall which also helps to locate the reciprocating mechanism and also accommodates the drive from the shaft of the motor to that mechanism.

The lower part of the space 19 is bounded by a transverse wall formed by half walls 32, 33 of the housing parts 14, 15 respectively. That tranverse wall is the upper boundary of a suction passage 34 whose lower surface is, in part, the lower incurved surfaces 35, 36 of the housing parts 14, 15 and in part the surface of a short wall composed of wall parts 37, 38. The wall parts 37, 38 are separated from the adjacent incurved surfaces of the housing parts to accommodate recesses 39 in which locate nuts (not shown) which receive screws (not shown) which secure the shoe 2 to the housing 1.

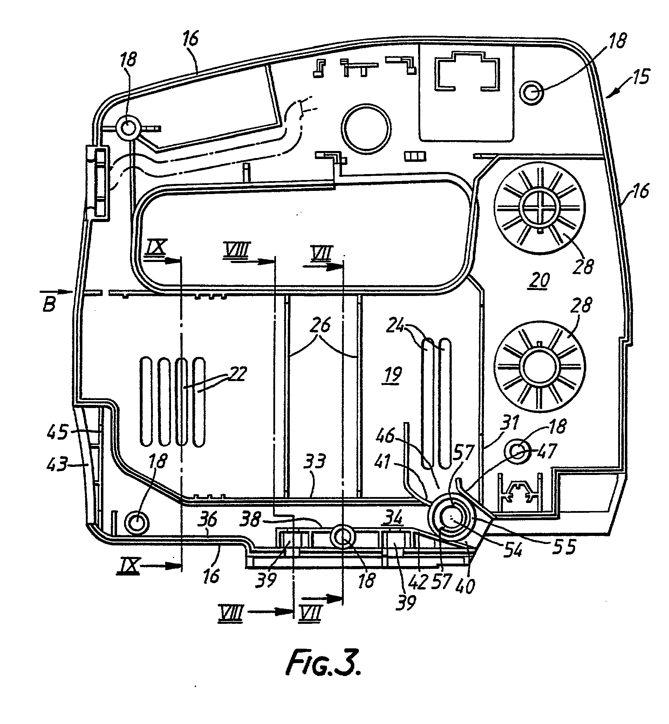

At its forward end adjacent the saw blade 4, suction passage 34 joins a downwardly inclined portion 40 formed between ribs 41, 42 of the housing parts. The portion 40 terminates in an outlet adjacent the saw blade 4 in the vicinity of the work area thereof. As can be seen from Figs. 2 and 3, each housing part has a mounting adjacent rib 41 whose function will be described below.

At the other, rear end, wall parts 32, 33 curve upwardly towards an exit aperture 43 formed between the parts 15 and 16 at the rear of the housing 1. Adjacent the aperture 43, the parts 14, 15 have internal ribs 44, 45 respectively which between them locate and support a short tube (not shown) that is flanged at one end, the flange locating on the inner side of the ribs 44, 45.

A second short passage 46 is formed above the portion 40 between the ribs 41 and further ribs 47 of the housing parts. This passage 46 forms a "blow" passage and has a downward inclination similar to that of portion 40 which it joins at its lower end. At its upper end, passage 46 terminates in the vicinity of the motor cooling fan and adjacent the exit slots 23, 24.

Positioned laterally across portion 40 is a flow control valve 48 shown in perspective view in Fig. 12 and diagrammatically in Figs. 13 and 14. The valve 48 is of generally overall cylindrical form with a stub axle 49 at one end and a locking peg 50 formed on a second stub axle 49 at the other. The axle 49 is slotted as at 51 to enable a user to rotate the valve as will be described in more detail below. Between its ends, the valve is cut away as at 52 to form a semitubular sealing member 53.

The valve 48 seats in the mountings referred to above and which are referenced 54 in Figs. 2 and 3. The mountings each comprise a tubular socket 54 formed in the housing part and in which the stub axles 49 locate and adjacent end faces 55 which maintain the valve in a correct axial location. Socket 54 on housing part 15 is cut away as at 56 to form end stops 57 that, in conjunction with peg 50, limit the rotational movement of the valve 48 to about 180° of arc. In addition, the cut away 56 ensures that the valve can be located in one orientation only - that in which the peg 50 locates in the cut away.

Fig. 14 is a scrap view showing the valve 48 mounted in the sockets. The joint face of the housing halves 14, 15 is indicated at 58. The socket in the body part 14 extends to the outer surface of that part to give access to the slot 51 thereby enabling a user to rotate the valve as required.

The control valve 48 is rotatable between two extreme positions identified by the end stops 57. Firstly, the position shown in Fig. 15 in which the semi-cylindrical portion 53 locates in the portion 40 and completely closes it, the passage 46 being left completely open by the cut-away 52. The second position of the valve 48 is shown in Fig. 16. The portion 53 is now located in the passage 46 completely closing it whilst portion 40 is left completely open by the cut-away 52.

Between those two positions of the valve 48 either the passage 46 is partially closed whilst the portion 40 remains fully closed or the portion 40 is partially closed and the passage 46 remains fully closed. At no time during the rotation of the valve 48 are portion 40 and passage 46 simultaneously open either fully or partially.

Before using the jig saw, it is first necessary to fit the blade 4 and, if the user wishes to withdraw debris from the work area, to connect the short tube referred to above to a source of vacuum which may be a vacuum cleaner or a workshop cleaner for example.

The valve 48 then turns to the position shown in Fig. 16 in which passsage 46 is closed.

The jig-saw is then operated in the conventional manner and debris produced is entrained in the flow of air created along the passage 34 from the work area. Air enters that area through the gap between the lower edges 13 of the guard 11 and the upper surface of the shoe 2 and round the vertical side of the guard. The air flow is shown in Fig. 16 by the arrows 59.

Surprisingly, such entrainment is found to be effective in the absence of the air blast on to the work area previously thought to assist such entrainment. The output of the motor cooling fan which would have entered passage 46 had the latter not been closed is diverted, as indicated by arrows 60, out through the exit slots 23, 24 and the flow of cooling air over the motor is substantially unaffected.

If the user wishes to employ the jig saw without suction and to clear debris away from the work area by using the air blast, the vacuum source is disconnected and the valve 48 rotates to the position shown in Fig. 15. Part of the output of the cooling fan can now enter passage 46 and be directed thereby on to the work area. This is indicated in Fig. 15 by the arrows 61.

The effectiveness of the air blast is not affected by the simultaneous presence of suction.

It will be appreciated that the control valve may take forms other than that described above. A slide valve may be used consisting of a simple component having a first position in which passage 46 is closed with portion 40 left open, and a second position in which passage 46 is left open and portion 40 closed. Alternatively, a flap type valve may be used.

Alternatively, the two valves may be separate and independently controllable so that movement of one does not affect the other. In that way, a user has complete control over the volume of air passing through the blow passage and over the degree of suction in the suction passage.

In the embodiment described above with reference to the drawings, it is possible to dispense with suction merely by disconnecting the suction source. The use of the valve enables a user to terminate the air blast on to the work area when suction only is required.

In the case in which the tool includes a second fan for creating air flow along the suction passage, a single valve in that passage will control the application of suction to the work area.

The second fan may also be mounted upon the armature shaft of the motor. In that case, suction will always be present when the jig saw is in use but is prevented, when so required by the user, from being effective to draw debris away from the work area by the valve 48 or its equivalent.

Furthermore, the suction passage 34 may be external to the jig saw housing. It may be in the form of a separate conduit mounted upon the shoe for example and with its mouth located close to the work area and the exit of the blow passage to allow, if desired, the use of a single valve to control both suction and blow. Otherwise, separate valves may be used.

It is also possible to employ two valves one in the blow passage and the other in the suction passage, the valves may be interlocked in a manner that prevents them being operated to positions in which both passages are open simultaneously.

In the embodiment described above, the blow and suction passages share a common outlet but are otherwise separate.

In an alternative embodiment, the passages may merge into a single common passage whose outlet is located adjacent the clamp 5 and in which the valve 48 is located. The common passage could be a continuation of the blow or of the suction passage.

The invention may be embodied in hand-held power tools other than jig-saws, for example, routers, sabre saws and plaster saws, and sanders either belt or rotary.

The invention is also applicable to bench mounted, i.e. stationary, tools.

## Claims

1. A power tool comprising a housing (1) accommodating a mechanism for driving a tool piece (4) and in which there is provided a first passage (46) arranged to direct an air flow towards a work area of the tool, and in which there is also provided a second passage (34) extending away from the work area characterised in that valve means (48) are provided for selectively opening and closing the first and second passages.

2. A tool as claimed in claim 1 characterised in that the first (46) and second (34) passages share a common outlet adjacent the work area.

3. A tool as claimed in claim 1 characterised in that the first (46) and second (34) passages merge into a single passage (40) having an outlet adjacent the work area.

4. A tool as claimed in claim 2 or 3 characterised in that the valve means (48) is located in or adjacent the common outlet or in the single passage (40).

5. A tool as claimed in any one of claims 1–4 characterised in that the valve means (48) comprises a valve in the first passage (46) and a separate valve in the second passage (34).

6. A tool as claimed in claim 5 characterised in that the valve and the separate valve are operatively linked together in a manner such that as one of the first (46) and second (34) passages is closed, the other thereof is opened.

7. A tool as claimed in any one of claims 1–6 characterised in that the valve means (48) is such that both the first (46) and second (34) passages cannot be open simultaneously.

8. A tool as claimed in claim 7 characterised in that the valve means (48) comprises a single valve member (53) having a first position characterised the first passage is open and the second closed, and a second position in which the first passage is closed and the second open.

9. A tool as claimed in claim 8 characterised in that the valve member (53) is rotatable from one position to the other.

10. A tool as claimed in claim 8 or 9 characterised in that the valve member (53) is housed partly in the first (46) passage and partly in the second passage (34).

11. A tool as claimed in claim 8, 9 or 10 characterised in that the valve member (53) is of generally cylindrical form having a central semicylindrical portion which in the first position closes the first passage (46) and in the other position closes the second passage (34).

12. A tool as claimed in claim 9, 10 or 11 characterised in that stop means (57) are provided for limiting the rotational movement of the valve member (53) to about 180° of arc.

13. A tool as claimed in any one of the preceding claims characterised in that the mechanism includes a driving motor and a fan for circulating air over the motor, and in which the first passage (46) is positioned to receive a part of the air circulated by the fan.

14. A tool as claimed in any one of the preceding claims characterised in that the second passage (34) is adapted, at its other end, for connection to a source of vacuum separate from the tool.

15. A tool as claimed in any one of claims 1–14 characterised in that the housing (1) includes means for withdrawing air along the second passage in a direction away from the work area.

16. A tool as claimed in any one of the preceding claims characterised in that both first (46) and second (34) passages are accommodated within the housing (1).

17. A tool as claimed in any one of the preceding claims characterised in that the housing (1) is of two-part (14, 15) clam shell construction, and in which the first (46) and second (34) passages are formed by co-operating portions of the housing parts (14, 15).

18. A power tool as claimed in any one of the preceding claims and comprising a jig-saw.

**Patentansprüche**

1. Kraftgetriebenes Werkzeug mit einem Gehäuse (1) aufnehmend einen Mechanismus zum Antreiben eines Werkzeugelementes (4) und enthaltend einen ersten Weg (46) zum Richten eines Luftstroms auf einen Arbeitsbereich des Werkzeugs sowie auch aufweisend einen zweiten Weg (34), der sich vom Arbeitsbereich weg erstreckt, dadurch gekennzeichnet, daß Ventilmittel (48) zum wahlweisen Öffnen und Schließen des ersten und des zweiten Weges vorgesehen sind.

2. Werkzeug nach Anspruch 1, dadurch gekennzeichnet, daß der erste (46) und der zweite (34) Weg einen gemeinsamen Auslaß benachbart zum Arbeitsbereich teilen.

3. Werkzeug nach Anspruch 1, dadurch gekennzeichnet, daß der erste (46) und der zweite (34) Weg in einem einzigen Weg (40) zusammenlaufen, der benachbart zum Arbeitsbereich einen Auslaß aufweist.

4. Werkzeug nach Anspruch 2 oder 3, dadurch gekennzeichnet, daß die Ventilmittel (48) in oder benachbart zum gemeinsamen Auslaß oder im einzigen Weg (40) angeordnet sind.

5. Werkzeug nach einem der Ansprüche 1 bis 4, dadurch gekennzeichnet, daß die Ventilmittel (48) ein Ventil im ersten Weg (46) und ein getrenntes Ventil im zweiten Weg (34) enthalten.

6. Werkzeug nach Anspruch 5, dadurch gekennzeichnet, daß das Ventil und das getrennte Ventil derart miteinander gekoppelt sind, daß wenn einer des ersten (46) und des zweiten (34) Weges geschlossen ist, der andere geöffnet ist.

7. Werkzeug nach einem der Ansprüche 1 bis 6, dadurch gekennzeichnet, daß die Ventilmittel (48) so ausgebildet sind, daß nicht der erste (46) und der zweite (34) Weg gleichzeitig geöffnet sein können.

8. Werkzeug nach Anspruch 7, dadurch gekennzeichnet, daß die Ventilmittel (48) ein einzelnes Ventilelement (43) aufweisen, das eine erste Stellung, die den ersten Weg als offen und den zweiten als geschlossen kennzeichnet, und eine zweite Stellung hat, in der der erste Weg geschlossen und der zweite geöffnet ist.

9. Werkzeug nach Anspruch 8, dadurch gekennzeichnet, daß das Ventilelement (53) von einer Stellung in die andere drehbar ist.

10. Werkzeug nach Anspruch 8 oder 9, dadurch gekennzeichnet, daß das Ventilelement (53) teilweise im ersten Weg (46) und teilweise im zweiten Weg (34) angeordnet ist.

11. Werkzeug nach Anspruch 8, 9 oder 10, dadurch gekennzeichnet, daß das Ventilelement (53) im allgemeinen zylindrische Form mit einem mittleren halbzylindrischen Bereich hat, der in der ersten Stellung den ersten Weg (46) und in der anderen Stellung den zweiten Weg (34) verschließt.

12. Werkzeug nach Anspruch 9, 10 oder 11, dadurch gekennzeichnet, daß Anschlagmittel (57) zur Begrenzung der Drehbewegung des Ventilelementes (53) auf einen Bogen von etwa 180° vorgesehen sind.

13. Werkzeug nach einem der vorhergehenden Ansprüche, dadurch gekennzeichnet, daß der Mechanismus einen Antriebsmotor und einen Lüfter zum Umwälzen von Luft über den Motor aufweist, und wobei der erste Weg (46) so angeordnet ist, daß er einen Teil der vom Lüfter umgewälzten Luft empfängt.

14. Werkzeug nach einem der vorhergehenden Ansprüche, dadurch gekennzeichnet, daß der zweite Weg (34) an seinem anderen Ende zur Verbindung mit einer getrennt vom Werkzeug bestehenden Unterdruckquelle geeignet ist.

15. Werkzeug nach einem der Ansprüche 1 bis 14, dadurch gekennzeichnet, daß das Gehäuse (1) Mittel zum Absaugen von Luft entlang dem zweiten Weg in Richtung weg vom Arbeitsbereich aufweist.

16. Werkzeug nach einem der vorhergehenden Ansprüche, dadurch gekennzeichnet, daß sowohl der erste (46) als auch der zweite (34) Weg sich innerhalb des Gehäuses (1) befinden.

17. Werkzeug nach einem der vorhergehenden Ansprüche, dadurch gekennzeichnet, daß das Gehäuse (1) eine zweiteilige (14, 15) Halbschalenkonstruktion ist, in der der erste (46) und der zweite (34) Weg durch zusammenwirkende Bereiche der Gehäuseteile (14, 15) gebildet sind.

18. Kraftgetriebenes Werkzeug nach einem der vorhergehenden Ansprüche in Form einer Stichsäge.

## Revendications

1. Outil à moteur comprenant un carter (1) qui renferme un mécanisme destiné à entraîner un élément d'outil (4), et dans lequel est prévu un premier passage (46) agencé pour diriger un flux d'air vers une zone de travail de l'outil, et dans lequel il est en outre prévu un deuxième passage (34) qui part de la région de travail, caractérisé en ce que des moyens obturateurs (48) sont prévus pour ouvrir et fermer sélectivement le premier passage et le deuxième passage.

2. Outil selon la revendication 1, caractérisé en ce que le premier passage (46) et le deuxième passage (34) se partagent une sortie commune adjacente à la zone de travail.

3. Outil selon la revendication 1, caractérisé en ce que le premier passage (46) et le deuxième passage (34) se rejoignent pour former un passage unique (40) possédant une sortie adjacente à la zone de travail.

4. Outil selon la revendication 2 ou la revendication 3, caractérisé en ce que les moyens obturateurs (48) sont placés dans la sortie commune ou dans le passage unique (40) ou à proximité de cette sortie ou de ce passage.

5. Outil selon une quelconque des revendications 1 à 4, caractérisé en ce que les moyens obturateurs (48) comprennent un obturateur logé dans le premier passage (46) et un obturateur séparé logé dans le deuxième passage (34).

6. Outil selon la revendication 5, caractérisé en ce que l'obturateur et l'obturateur séparé sont accouplés fonctionnellement l'un à l'autre de manière que, lorsque l'un des premier et deuxième passages (46, 34) est fermé, l'autre passage soit ouvert.

7. Outil selon une quelconque des revendications 1 à 6, caractérisé en ce que les moyens obturateurs (48) sont tels que le premier passage (46) et le deuxième passage (34) ne puissent pas être ouverts simultanément.

8. Outil selon la revendication 7, caractérisé en ce que les moyens obturateurs (48) comprennent un élément obturateur unique (53) pouvant prendre une première position, dans laquelle le premier passage est ouvert et le deuxième fermé, et une deuxième position, dans laquelle le premier passage est fermé et le deuxième ouvert.

9. Outil selon la revendication 8, caractérisé en ce que l'élément obturateur (53) peut être amené d'une position à l'autre par rotation.

10. Outil selon la revendication 8 ou la revendication 9, caractérisé en ce que l'élément obturateur (53) est logé en partie dans le premier passage (46) et en partie dans le deuxième passage (34).

11. Outil selon une des revendications 8, 9 et 10, caractérisé en ce que l'élément obturateur (53) est d'une forme générale cylindrique et possède une portion centrale semi-cylindrique qui ferme le premier passage (46) dans la première position et ferme le deuxième passage (34) dans l'autre position.

12. Outil selon une quelconque des revendications 9, 10 et 11, caractérisé en ce que des moyens d'arrêt (57) sont prévus pour limiter le mouvement de rotation de l'élément obturateur (53) à un arc d'environ 180°.

13. Outil selon une quelconque des revendications précédentes, caractérisé en ce que le mécanisme comprend un moteur d'entraînement et un ventilateur servant à faire circuler l'air sur le moteur, et dans lequel le premier passage (46) est positionné de manière à recevoir une partie de l'air mis en circulation par le ventilateur.

14. Outil selon une quelconque des revendications précédentes, caractérisé en ce que le deuxième passage (34) est adapté à son autre extrémité pour se raccorder à une source d'aspiration séparée de l'outil.

15. Outil selon une quelconque des revendications 1 à 14, caractérisé en ce que le carter (1) comprend des moyens servant à extraire de l'air le long du deuxième passage dans le sens qui s'éloigne de la zone de travail.

16. Outil selon une quelconque des revendications précédentes, caractérisé en ce que le premier passage (46) et le deuxième passage (34) sont tous deux logés à l'intérieur du carter (1).

17. Outil selon une quelconque des revendications précédentes, caractérisé en ce que le carter (1) est d'une construction en coquille en deux parties (14, 15) et en ce que le premier passage (46) et le deuxième passage (34) sont formés par des portions coopérantes des parties (14, 15) du carter.

18. Outil selon une quelconque des revendications précédentes et constituant une scie sauteuse.

FIG. I.

FIG.2.

**FIG.3.**

*Fig.7.*

*Fig.4.*

*Fig.8.*

*Fig.5.*

*Fig.9*

*Fig.6.*

EP 0 221 652 B1

Fig. II.

Fig. IO.

Fig. I2.

FIG. 13.

FIG. 14.

Fig. 15.

Fig. 16.